# EUROPÄISCHE PATENTANMELDUNG

(11) **EP 4 350 079 A1**
(43) Veröffentlichungstag der Anmeldung: **10.04.2024**
(21) Anmeldenummer: 22200061.4
(22) Anmeldetag: 06.10.2022
(51) Int. Cl.: E02D 7/00, E02D 17/13, E02D 13/06, E02F 9/26, E02F 9/16, E21B 41/00, E21B 7/00, B60R 11/02

(54) **TIEFBAUMASCHINE UND VERFAHREN ZUM BETREIBEN EINER TIEFBAUMASCHINE**

(71) Anmelder: BAUER Maschinen GmbH, 86529 Schrobenhausen (DE)
(72) Erfinder: Schober, Andreas, 86637 Wertingen (DE); Baby, Ulrich, 85244 Röhrmoos (DE); Lanzl, Christian, 86666 Burgheim (DE)
(74) Vertreter: Wunderlich & Heim Patentanwälte PartG mbB

(57) **Zusammenfassung**

Die Erfindung betrifft eine Tiefbaumaschine mit einem mobilen Trägergerät, einem Mast oder Auslegerarm, welcher an dem Trägergerät angeordnet ist, einem Tiefbauwerkzeug, welches zum Ausführen einer Tiefbaumaßnahme an dem Mast oder Auslegerarm verstellbar ist, einer Maschinensteuereinheit, einem Bedienstand für mindestens eine Bedienperson mit mindestens einem Monitor, wobei die Maschinensteuereinheit mit dem mindestens einen Monitor in Verbindung steht und ausgebildet ist, Betriebsdaten in einer Anordnung von Anzeigefeldern auf dem mindestens einen Monitor anzuzeigen. Nach der Erfindung ist vorgesehen, dass der mindestens eine Monitor schwenkbar zwischen einer quergestellten Position und einer hochgestellten Position gelagert ist, welche, insbesondere um 90°, zur quergestellten Position verschwenkt ist, und dass die Maschinensteuereinheit ausgebildet ist, bei einem Verschwenken des Monitors die Anordnung der Anzeigefelder auf dem Monitor zu verändern und anzupassen, so dass diese für die Bedienperson weiter lesbar sind.

## Beschreibung

Die Erfindung betrifft eine Tiefbaumaschine mit einem mobilen Trägergerät, einem Mast oder Auslegerarm, welcher an dem Trägergerät angeordnet ist, einem Tiefbauwerkzeug, welches zum Ausführen einer Tiefbaumaßnahme an dem Mast oder Auslegerarm verstellbar ist, einer Maschinensteuereinheit, einem Bedienstand für mindestens eine Bedienperson mit mindestens einem Anzeigegerät, wobei die Maschinensteuereinheit mit dem mindestens einen Anzeigegerät in Verbindung steht und ausgebildet ist, Betriebsdaten in einer Anordnung von Anzeigefeldern auf dem mindestens einen Anzeigegerät anzuzeigen, gemäß dem Oberbegriff des Anspruchs 1.

Die Erfindung betrifft weiterhin ein Verfahren zum Betreiben einer solchen Tiefbaumaschine nach dem Oberbegriff des Anspruchs 12.

Bei der Tiefbaumaschine kann es sich beispielsweise um eine Schlitzwandfräse, eine Ramme, einen Greifbagger, einen Seilbagger aber auch um einen Mobilkran beziehungsweise einen mobilen Auslegerkran handeln.

Tiefbaumaschinen insbesondere zum Erstellen von Gründungen im Boden sind seit langem bekannt. Ein Gründungselement kann dabei beispielsweise durch Erstellen eines Loches im Boden, etwa eines Bohrloches oder eines Frässchlitzes, gebildet werden, wobei das Loch anschließend zum Bilden eines Gründungspfahles oder eines Schlitzwandsegmentes gegebenenfalls mit einer zusätzlichen Armierung mit einem aushärtbaren Medium, insbesondere einem Zement, verfüllt wird. Ein Gründungselement kann auch durch Einrammen oder Einrütteln, etwa eines Gründungspfahles oder einer Bohle erfolgen. Ein Gründungselement ist dabei nicht auf eine Lastaufnahme oder eine Tragfähigkeitsfunktion beschränkt, sondern kann alternativ oder ergänzend auch eine Dichtfunktion und oder andere Aufgaben übernehmen, wie es etwa bei Baugrubenumschließungen mit Dichtwänden aus dem Spezialtiefbau bekannt ist.

Bekannte Tiefbaumaschinen sind heutzutage mit elektronischen Steuereinheiten versehen, welche den Betrieb der Tiefbaumaschine für einen Maschinenbediener erleichtern oder sogar teil- oder vollautomatisch übernehmen können. Über Sensoren können verschiedene Betriebsdaten erfasst und der Steuereinheit zugeleitet werden. Über entsprechende Datenleitungen können Steuerbefehle an entsprechende Aktoren, insbesondere Antriebe und Stellzylinder, ausgegeben werden.

Derartige Tiefbaumaschinen sind beispielsweise aus der EP 3299523 A1, der EP 3296467 A1 bekannt.

Anzeigeeinrichtungen in Tiefbaumaschinen dienen dazu, Betriebsdaten, die von der Steuereinheit von internen und/oder externen Sensoren erfasst werden, dem Maschinenbediener anzuzeigen, so dass er die Tiefbaumaschine entsprechend effektiv und sicher steuern kann. Bei den Daten kann es sich beispielsweise um die aktuelle Tiefe des Tiefbauwerkzeuges, um ein Drehmoment einer Winde oder auch um eine Temperatur des Öls in einem Ölkreislaufs handeln.

Abhängig von der Maschinenausstattung und/oder einem durchzuführenden Arbeitsverfahren müssen eine Vielzahl von Daten einem Maschinenbediener angezeigt werden, um zuverlässig und effizient ein Gründungselement erstellen zu können. Hierdurch steigt der Bedarf zur Anordnung mehrerer Anzeigegeräte wie z. B. Monitore in einer Bedienkabine. Allerdings können Anzeigegeräte wie Monitore in dem begrenzten Raum der Bedienkabine die Sicht des Maschinenbedieners auf die Baustelle, ein Bohr- oder Fräsloch, das Bearbeitungswerkzeug, den Mast oder andere wesentliche Komponenten der Maschine einschränken oder vollständig verhindern.

Der Erfindung liegt die **Aufgabe** zugrunde, eine Tiefbaumaschine sowie ein Verfahren zum Betreiben einer Tiefbaumaschine anzugeben, welche eine besonders effiziente Nutzung einer Tiefbaumaschine durch den Maschinenbedienern ermöglichen.

Diese Aufgabe wird zum einen durch eine Tiefbaumaschine mit den Merkmalen des Anspruchs 1 und zum anderen durch ein Verfahren mit den Merkmalen des Anspruchs 12 gelöst.

Bevorzugte Ausführungsform der Erfindung sind in den abhängigen Ansprüchen sowie in den Figuren und deren Beschreibung angegeben.

Die erfindungsgemäße Tiefbaumaschine ist dadurch gekennzeichnet, dass das mindestens eine Anzeigegerät, insbesondere ein Monitor, schwenkbar zwischen einer quergestellten Position und einer hochgestellten Position gelagert ist, welche insbesondere um 90° zur quergestellten Position verschwenkt ist, und dass die Maschinensteuereinheit ausgebildet ist, bei einem Verschwenken des Anzeigegeräts die Anordnung der Anzeigefelder auf dem Anzeigegerät zu verändern und anzupassen, so dass diese für die Bedienperson weiter lesbar sind.

Eine Grundidee der Erfindung besteht darin, das mindestens eine Anzeigegerät verschwenkbar um eine Schwenkachse zu lagern. Nachfolgend wird der Begriff Monitor synonym für Anzeigegerät verwendet, wobei das Anzeigegerät nicht auf einen eigentlichen Monitor oder Bildschirm beschränkt ist. Der Monitor weist vorzugsweise einen üblichen rechteckigen Bildschirm auf, ohne jedoch auf diese Form beschränkt zu sein. Durch die Möglichkeit des Verschwenkens kann ein Maschinenbediener den Monitor in verschiedene Positionen bringen, welche je nach Betriebssituation zweckmäßig sind. So kann eine quergestellte Position in einem normalen Betrieb für das Ablesen von Daten zweckmäßig sein. Durch ein Verschwenken in eine hochgestellte Position kann etwa eine Darstellung zu einem Bohrloch oder zu einer vertikalen Mastausrichtung besonders anschaulich erfolgen. Zudem wird ein Sichtfeld in der Horizontalen aus der Bedienkabine durch einen hochgestellten Monitor weniger eingeschränkt als bei einer quergestellten Position, wenn ein üblicher rechteckiger Bildschirm verwendet wird.

Die Erfindung ist dabei nicht auf eine freie Anordnung und Verschwenkbarkeit von einem oder mehreren Monitoren beschränkt. Vielmehr ist auch die Maschinensteuerung derart ausgebildet, dass bei einem Verschwenken oder Verstellen des Monitors die Anordnung der Anzeigefelder auf dem Monitor entsprechend verändert und angepasst werden, so dass sie für die Bedienperson weiter lesbar sind. Insbesondere kann bei einem Verschwenken von einer quergestellten zu einer hochgestellten Position des Monitors eine Zeilendarstellung und/oder die Anzeige von Bildern entsprechend angepasst und verändert werden.

Eine weitere vorteilhafte Ausgestaltung besteht nach der Erfindung darin, dass der mindestens eine Monitor entlang mindestens einer Linearführung verschiebbar gelagert ist. Die Linearführung kann dabei vorzugweise horizontal oder quergerichtet sein. Es können auch mehrere Linearführungen vorgesehen sein, wobei eine Linearführung auch vertikal gerichtet sein kann. Die Monitore können entlang der Konsole und/oder entlang der A-Säulen in der Kabine angeordnet sein. Mit den Linearführungen kann eine weitere Verstellung des mindestens einen Monitors in nahezu jede gewünschte Position erfolgen. Durch entsprechende Fixiereinrichtungen können die Monitore insbesondere durch die Bedienperson von Hand gelöst und wieder arretiert werden.

Besonders vorteilhaft ist es nach einer Ausführungsform der Erfindung, dass die Linearführung eine Führungsstange mit mindestens einem geraden Abschnitt und/oder mindestens einem gebogenen Abschnitt aufweist. Die Linearführung kann so aus einer oder mehreren Führungsstangen, etwa einem Stahl- oder Aluminiumlängsprofil mit einer Längsnut als Linearführung ausgebildet sein. Die Führungsstange kann auch in einer gebogenen Form angeordnet sein, so dass sich diese etwa ergonomisch zweckmäßig um eine Arbeitsposition der Bedienperson herum erstreckt.

Nach einer Ausführungsvariante der Erfindung ist es besonders zweckmäßig, dass mehrere Monitore entlang einer oder mehrerer Linearführungen verschiebbar und um eine jeweilige Schwenkachse schwenkbar sind. Insbesondere bei der Anordnung von zwei, drei oder mehr Monitoren können diese je nach der durchzuführenden Arbeitsaufgabe von einem Maschinenbediener in eine zweckmäßige Position gebracht werden, welche einerseits ein gutes Ablesen von Informationen von den Monitoren ermöglichen und andererseits das Sichtfeld des Maschinenbedieners zur Durchführung der Arbeitsaufgabe auf wesentliche Komponenten der Maschinen nicht oder zumindest nicht maßgeblich einschränken. Je nach Anzeigemodus können die Bildschirme auch so nebeneinander angrenzend angeordnet werden, dass etwa ein durchgehendes Bild über zwei oder mehr Monitore dargestellt wird.

Eine besonders stabile Ausgestaltung wird nach einer Weiterbildung der Erfindung dadurch erzielt, dass der mindestens eine Monitor schwenkbar an einem Verschiebeschlitten gelagert ist, welcher verschiebbar entlang der Linearführung gelagert ist. Insbesondere kann ein Schwenk- oder Drehgelenk an dem Verschiebeschlitten ausgebildet sein. Der Verschiebeschlitten kann selbst mit einer weiteren Linearführung versehen sein. So kann eine erste Linearführung etwa horizontal verlaufen, während eine zweite Linearführung auf dem Schlitten vertikal gerichtet sein kann. Sowohl das Schwenklager als auch der Verschiebeschlitten können eine Fixier- oder Arretiereinrichtung aufweisen, mit welcher eine eingestellte Position arretierbar oder feststellbar ist. Die Arretiereinrichtung kann insbesondere eine Klemmschraube zum kraftschlüssigen Fixieren einer eingestellten Position des Monitors aufweisen. Dies ermöglicht eine zuverlässige Halterung bei guter und schneller Lösbarkeit und Verstellbarkeit.

Nach einer weiteren Ausgestaltung der Erfindung ist es vorteilhaft, dass der mindestens eine Monitor leicht abnehmbar gehaltert ist. Der Monitor kann dabei über eine lösbare Verbindungseinrichtung von dem Schwenklager beziehungsweise dem Verschiebeschlitten gelöst und somit von der entsprechenden Grundhalterung entfernt werden. Alternativ kann auch das Schwenklager selbst und/oder der Verschiebschlitten gegenüber der Linearführung lösbar und zusammen mit dem Monitor abnehmbar sein. Dies ermöglicht insbesondere ein Versetzen des Monitors an eine andere Position, ohne dass etwa ein größerer Verschiebeweg vollzogen werden müsste.

Besonders vorteilhaft ist es nach einer Ausführungsvariante der Erfindung, dass der Monitor einen Energiespeicher aufweist, so dass der Monitor auch gelöst von der Halterung und ohne eine Kabelanbindung für eine bestimmte Zeit betrieben werden kann. Insbesondere kann so eine Datenverbindung zu der Maschinensteuereinheit oder zu einer anderen Übertragungseinheit drahtlos, insbesondere über Funk, insbesondere mittels WLAN oder eine Bluetooth-Verbindung, erfolgen.

Eine besonders kompakte Ausgestaltung der Erfindung besteht darin, dass über die Linearführung und/oder den Verschiebeschlitten mindestens eine Daten- und/oder Energiezuführung zu dem mindestens einen Monitor gegeben ist. In einem montierten Zustand an einer Grund- oder Monitorhalterung kann so eine physikalische Verbindung zur Daten- und/oder Energieübertragung gegeben sein. Dies ermöglicht einen besonders robusten Betrieb. In einer derartigen Position kann ein eventuell im Monitor angeordneter Energie- und/oder Datenspeicher mit Energie beziehungsweise Daten versorgt werden, so dass ein gewisser autarker Betrieb des Monitors losgelöst von der Halterung ermöglicht ist. Vorzugweise kann der Monitor als ein Tablet-Computer ausgebildet sein, der selbst eine Rechnereinheit umfasst und auch ohne unmittelbare Verbindung zu der Maschinensteuereinheit, wie ein Computer oder ein separates Steuergerät, betrieben werden kann.

Ein besonders zweckmäßiger Betrieb der Tiefbaumaschine wird nach einer Weiterbildung der Erfindung dadurch erzielt, dass die Maschinensteuereinheit einen Anzeige-Konfigurationsmodus umfasst, wobei bei Aktivierung des Anzeige-Konfigurationsmodus die Anzeige auf dem mindestens einen Monitor veränderbar und speicherbar ist. Der Anzeige-Konfigurationsmodus kann dabei von der Position des Monitors abhängen oder von einer individuellen Einstellung des jeweiligen Maschinenbedieners.

Der mindestens eine Monitor kann Teil der eigentlichen Steuereinrichtung zum Steuern der Tiefbaumaschine sein. Dabei können Eingaben über übliche Eingabeeinrichtungen, wie etwa Tastaturen, Schalter, Cursor etc., durchgeführt und unmittelbar an dem mindestens einen Monitor angezeigt werden. Besonders zweckmäßig ist es nach einer Ausführungsvariante der Erfindung, dass mindestens ein Monitor als ein Touchscreen ausgebildet ist. Vorzugsweise sind alle Monitore als Touchscreen ausgebildet. Hierdurch wird eine weitere effiziente Eingabemöglichkeit bereitgestellt.

Eine weitere vorteilhafte Ausgestaltung der erfindungsgemäßen Tiefbaumaschine wird dadurch erzielt, dass die Maschinensteuereinheit ausgebildet ist, die Anzeigefelder auf dem mindestens einen Monitor unabhängig von der Schwenkposition stets in einer horizontalen Ausrichtung anzuzeigen, wobei Zahlen und Buchstaben im Wesentlichen horizontal ausgerichtet sind. Eine Anpassung der Anzeigefelder muss nicht manuell von dem Maschinenbediener bei einem Verstellen von einem Monitor erfolgen. Vielmehr wird dies automatisch durch die Maschinensteuereinheit oder eine dazugehörende Steuereinheit in dem Monitor selbst veranlasst.

Die Maschinensteuereinheit im Sinne der Erfindung ist allgemein zu verstehen und kann eine einzelne computergestützte zentrale Steuereinheit umfassen und/oder mit einer Vielzahl von Steuereinheiten und/oder Rechnern gebildet sein, welche miteinander in Verbindung stehen und zum Steuern der Maschine zusammenwirken können.

Die Maschinensteuereinheit ist insbesondere nicht auf eine Steuerung einzelner Maschinenkomponenten beschränkt, sondern umfasst auch elektronisch ausgeführte Funktionen hinsichtlich der Übertragung von Daten und der Anzeige der Daten auf dem mindestens einen Monitor.

Daten von der Maschinensteuereinheit können nicht nur zu dem mindestens einen Monitor, sondern auch zu anderen Anzeigeeinrichtungen innerhalb oder außerhalb der Baumaschine übertragen werden.

Besonders bevorzugt ist die Tiefbaumaschine als ein Bohrgerät, eine Schlitzwandfräsvorrichtung, eine Greifervorrichtung, insbesondere ein Schlitzwandgreifer, ein Greiferbagger, ein Seilbagger, eine Ramme oder ein Rüttler ausgebildet. Unter einem Seilbagger kann allgemein ein Mobilkran mit einem verschwenkbaren Auslegerarm verstanden werden, wobei an einem Tragseil des Auslegerarms nicht zwingend eine Greifvorrichtung angeordnet sein muss. Vielmehr kann ein Seilbagger oder Mobilkran etwa auch zur Bodenverdichtung unter Einsatz eines Fallgewichtes eingesetzt werden.

Die Erfindung umfasst weiterhin ein Verfahren zum Betreiben einer erfindungsgemäßen Tiefbaumaschine, wobei der mindestens eine Monitor zwischen einer quergestellten Position und einer hochgestellten Position verschwenkt wird. Mit dem Verfahren können die zuvor beschriebenen Vorteile beim Betreiben der erfindungsgemäßen Tiefbaumaschine erzielt werden. Die Tiefbaumaschine und das Verfahren können insbesondere eine zusammengehörende Erfindung bilden.

Nach der Erfindung besteht eine vorteilhafte Verfahrensvariante darin, dass der mindestens eine Monitor entlang mindestens einer Linearführung verschoben wird. Es können insbesondere eine im Wesentlichen horizontal gerichtete erste Linearführung und eine im Wesentlichen vertikal gerichtete zweite Linearführung vorgesehen sein, welche zueinander verschiebbar gelagert sind. Auf diese Weise kann eine horizontale und vertikale Verstellung sowie ein Verschwenken des Monitors um eine Schwenkachse erfolgen. Grundsätzlich kann die Schwenkachse senkrecht zu einer Bildschirmfläche des Monitors und/oder senkrecht zu der Linearführung oder senkrecht zu den mehreren Linearführungen angeordnet sein.

Nach einer weiteren Ausführungsform des Verfahrens ist es vorteilhaft, dass ein Verschwenken und/oder Verschieben manuell durch einen Maschinenbediener oder automatisch durch eine Verstelleinrichtung, insbesondere abhängig von einem Betriebszustand der Tiefbaumaschine durch die Maschinensteuereinheit, ausgeführt wird. Bei einem manuellen Verstellen werden eine besonders einfache und kompakte Einrichtung und Halterung für den mindestens einen Monitor erzielt. Das Verstellen des mindestens einen Monitors kann auch durch mindestens einen Antrieb automatisch erfolgen, etwa durch einen Stellzylinder, einen Seilzugmechanismus oder ein sonstiges Stellglied. Dabei kann der mindestens eine Verstellantrieb der Verstelleinrichtung durch die Maschinensteuereinheit angesteuert werden, insbesondere abhängig von einem Betriebszustand der Tiefbaumaschine. Wird beispielsweise ein bestimmtes Bauverfahren durchgeführt, so können die Monitore durch die Maschinensteuereinheit automatisch an eine Position verfahren werden, welche beispielsweise eine gute Sicht auf den Mast, das Bearbeitungswerkzeug oder den Boden ermöglichen. In einem Fahrmodus des mobilen Trägergeräts können die Monitore so verstellt sein, dass eine möglichst freie Sicht nach vorne gewährleistet ist. Das Trägergerät weist ein Fahrwerk auf, welches insbesondere Raupen und/Räder umfassen kann.

Eine weitere Verbesserung der Verstellbarkeit wird nach einer Ausführungsvariante der Erfindung dadurch erzielt, dass der Monitor bei Bedarf abgebaut und anschließend an die gleiche Stelle oder an einer versetzten Position wieder an eine Linearführung angebaut wird. Der Monitor kann so besonders einfach auch zwischen weiter beabstandeten Positionen schnell verstellt werden, indem der Monitor gelöst und wieder neu an eine Grundhalterung mit der Linearführung angebaut wird.

Nach einem weiteren Grundgedanken der Erfindung ist es vorgesehen, dass neben einem ersten Monitor mindestens ein weiterer Monitor und/oder eine sonstige Anzeigeeinrichtung innerhalb oder außerhalb der Tiefbaumaschine angeordnet werden und dass an dem weiteren Monitor und/oder der sonstigen Anzeigeeinrichtung das Gleiche wie auf dem ersten Monitor oder etwas Anderes durch die Maschinensteuereinheit angezeigt wird. Es können so Bildschirminhalte auf verschiedenen Anzeigegeräten innerhalb und/oder außerhalb der Tiefbaumaschine dargestellt werden, wobei die angezeigten Inhalte sich voneinander unterscheiden können. Zum Beispiel kann ein Monitor in der Tiefbaumaschine etwas anderes zeigen als eine Datenbrille für einen Bauhelfer, der vor der Tiefbaumaschine steht. Auch können gleiche oder unterschiedliche Inhalte auf Anzeigeeinrichtungen zu einem Polier oder Bauleiter oder in einer Zentrale in Echtzeit übertragen werden. Die Daten können Leistungsdaten und/oder Verbrauchsdaten umfassen. Dem gegenüber können einem Maschinenbediener Daten zum Bohrfortschritt oder zum Hydraulikdruck oder sonstige Betriebsdaten angezeigt werden.

Vorzugsweise kann die Maschinensteuereinheit so ausgelegt sein, dass eine entsprechende Synchronisation der Daten mit den Bildschirminhalten an dem mindestens einen Monitor und/oder den anderen Anzeigeeinrichtungen erfolgt. Weiterhin kann eine individuelle Auswahl und Darstellungsform von Informationen oder Daten auf jedem Monitor oder jeder Anzeigeeinrichtung erfolgen.

Der mindestens eine Monitor kann kabelgebunden oder vorzugsweise drahtlos, insbesondere über eine Funkschnittstelle, mit der Maschinensteuereinheit in Verbindung stehen. Weiterhin können individuelle Rechte einzelnen Monitoren oder Anzeigeeinrichtungen zugeordnet sein, so dass abhängig von einer Anmeldung eines bestimmten Maschinenbedieners oder im Falle mindestens eines weiteren Monitors und/oder mindestens einer anderen Anzeigeeinrichtung von einer Anmeldung mindestens eines weiteren Betrachters eine individuelle Anzeige von Daten auf dem mindestens einen Monitor bzw. dem mindestens einen weiteren Monitor und/oder der mindestens einen weiteren Anzeigeeinrichtung erfolgt. Außerdem kann eine Gruppierung von Monitoren zur Tiefbaumaschine oder zu dem gleichen Maschinenbediener vorgesehen sein, so dass mit einem einzelnen Login eine entsprechende Anpassung für die Monitore und/oder Anzeigeeinrichtungen einer Gruppe möglich ist.

Grundsätzlich kann der mindestens eine Monitor über ein Kabel mit der Maschinensteuereinheit verbunden sein. Besonders vorteilhaft ist es nach einer Weiterbildung der Erfindung, dass der mindestens eine Monitor und/oder die mindestens eine Anzeigeeinrichtung drahtlos mit der Maschinensteuereinheit zur Datenübertragung verbunden werden. Es kann insbesondere eine Funkschnittstelle zur drahtlosen Datenübertragung vorgesehen sein.

Die Erfindung wird nachfolgend anhand von bevorzugten Ausführungsbeispielen weiter erläutert, welche schematisch in den Zeichnungen dargestellt sind. In den Zeichnungen zeigen:
- Fig. 1: eine schematische Seitenansicht einer erfindungsgemäßen Tiefbaumaschine und
- Fig. 2: eine schematische Darstellung zu einer Anordnung von Monitoren.

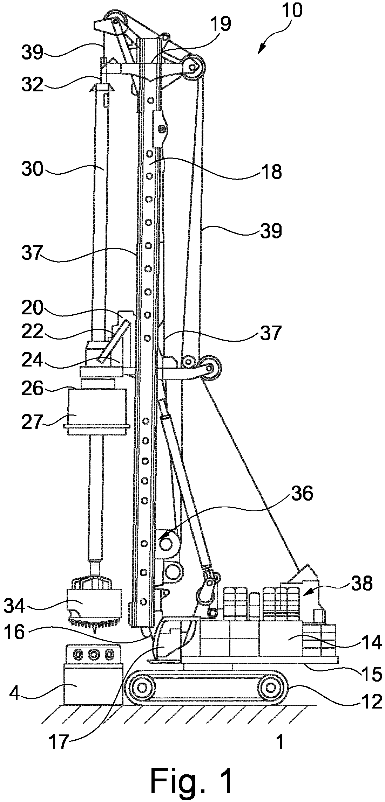

Eine erfindungsgemäße Tiefbaumaschine 10, welche beispielhaft als ein Bohrgerät gemäß Fig. 1 ausgebildet ist, weist einen vorzugsweise als Raupenfahrwerk ausgebildeten Unterwagen 12 und einen darauf drehbar gelagerten Oberwagen 14 auf. Der Unterwagen 12 und der Oberwagen 14 bilden ein Trägergerät 15. An dem Oberwagen 14 können in bekannter Weise Antriebsaggregate und ein Bedienstand 17 für einen Maschinenbediener der Tiefbaumaschine 10 angeordnet sein. In dem Bedienstand 17 können eine Steuereinheit und eine Anzeigeeinrichtung, insbesondere mindestens ein Monitor 52, angeordnet sein.

An einer Vorderseite des Oberwagens 14 kann über eine Anlenkkinematik 16 mit Nackenzylindern ein im wesentlichen vertikaler Mast 18 mit einem oberen Mastkopf 19 verstellbar angebracht sein. Entlang einer Vorderseite des Mastes 18 kann ein Schlitten 20 verschiebbar geführt werden. Auf dem Schlitten 20 kann ein erster Bohrantrieb 22 vorgesehen, welcher einen Hydraulikmotor 24 aufweisen kann. Weiterhin kann an dem Schlitten 20 ein zweiter Antrieb 26 mit einer hülsenförmigen Drehverbindung 27 zum Herstellen einer drehfesten Verbindung zu einem Stützrohr 4 vorgesehen sein. Der zweite Antrieb 26 kann beispielsweise im Wesentlichen aus einer Getriebeverbindung zu dem ersten Bohrantrieb 22 mit dem Hydraulikmotor 24 bestehen, um so ein Drehmoment auf die Drehverbindung 27 und damit das Stützrohr 4 aufzubringen.

Der etwa hülsenförmige erste Bohrantrieb 22 kann beispielhaft von einem Bohrgestänge 30 durchdrungen werden, welches als ein Kellygestänge mit äußeren Mitnehmerleisten ausgebildet sein kann. Hierbei kann das Bohrgestänge 30 eine obere Aufhängung 32 aufweisen, mit welcher das Bohrgestänge 30 mit einem Hauptseil 39 verbunden ist. Das Hauptseil 39 kann über Umlenkrollen am Mastkopf 19 zu einer Hauptwinde 38 an der Oberseite des Oberwagens 14 geführt sein. Durch Betätigen der Hauptwinde 38 kann das Bohrgestänge 30 vertikal bewegt werden.

Der Schlitten 20 kann mit einem Vorschubseil 37 verbunden sein, welches oberhalb und unterhalb des Schlittens 20 entlang des Mastes 18 geführt und von einer Vorschubwinde 36 betätigt werden kann. Durch die Vorschubwinde 36 kann der Schlitten 20 entlang einer Führung des Mastes 18 nach oben oder unten bewegt werden.

An einer Unterseite des Bohrgestänges 30 ist ein Bohrwerkzeug als Tiefbauwerkzeug 34 zum Abtragen von Bodenmaterial angebracht. Das Tiefbauwerkzeug 34 ist in dem dargestellten Ausführungsbeispiel nach Fig. 1 als ein Bohreimer ausgeführt. Der Durchmesser des Bohrwerkzeuges ist dabei so ausgebildet, dass dieses in den inneren Hohlraum des Stützrohres 4 eingeführt werden kann.

Mit der Tiefbaumaschine 10 kann eine verrohrte Bohrung im Boden 1 erstellt werden. Zum Bilden eines Gründungselementes im Boden 1 kann in die Bohrung eine aushärtbare Masse eingeleitet werden, welche dann zum Gründungselement aushärtet. Das Stützrohr 4 kann in der Bohrung als Teil des Gründungselementes verbleiben oder vorzugsweise vor einem Aushärten aus dem Boden 1 gezogen werden.

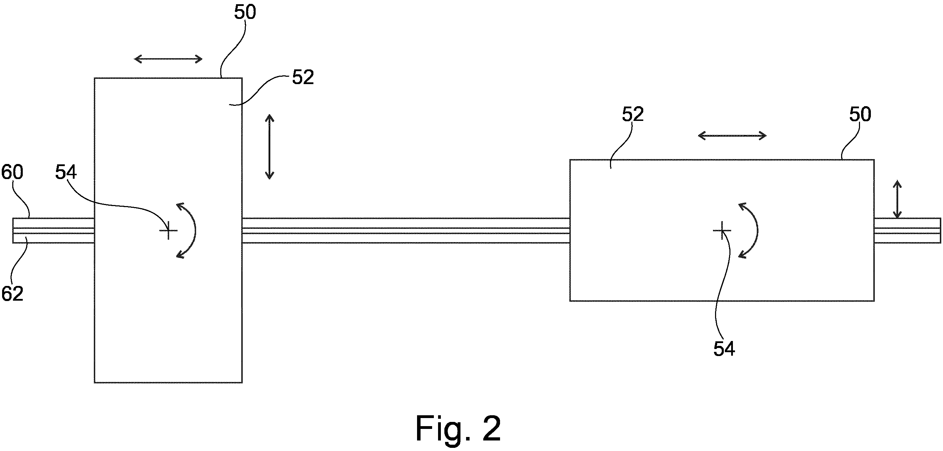

Zur Verdeutlichung der Erfindung ist in Figur 2 schematisch eine Anordnung von zwei Monitoren 52 als Anzeigeeinrichtung 50 dargestellt, wie sie insbesondere in einem Bedienstand 17 in der Tiefbaumaschine nach Figur 1 eingesetzt werden kann. Die Monitore 52 können an einer Grundhalterung 60 mit mindestens einer Linearführung 62 verstellbar gelagert sein.

In dem dargestellten Ausführungsbeispiel sind die Monitore 52 jeweils über ein Schwenklager an einem nicht dargestellten Verschiebeschlitten um eine Schwenkachse 54 um zumindest 90° schwenkbar gelagert. So können die Monitore 52 zwischen einer hochgestellten Position, welche bei dem linksseitigen Monitor 52 gezeigt ist, und einer quergestellten, etwa horizontalen Position verschwenkt werden, wie es bei dem rechtsseitigen Monitor 52 in Figur 2 dargestellt ist. Die Schwenkbewegung um die jeweilige Schwenkachse 54 ist durch einen Pfeil dargestellt.

Die Querverschiebbarkeit der Monitore 52 entlang der Linearführung 62 ist ebenfalls durch quer gerichtete Pfeile gekennzeichnet. Weiterhin können die Monitore 52 auch etwa senkrecht zur Linearführung 62 durch entsprechende Führungen an den nicht dargestellten Verschiebeschlitten verschiebbar sein, so dass sich eine Verschiebung in einer vertikalen Richtung oder in Richtung einer Hochachse ergibt, wie ebenfalls durch Pfeile dargestellt ist. Auch sind Verschwenkungen oder Verdrehungen um Achsen möglich.

Weiterhin kann in bevorzugter Weise zumindest ein Monitor 52 auch um eine quer gerichtete Kippachse, welche etwa parallel zur Linearführung 62 verläuft, auch neigbar oder kippbar sein. Die Monitore 52 können in der jeweils eingestellten Position mittels einer Arretiereinrichtung fixiert werden. Zum Verstellen kann die Arretiereinrichtung gelöst werden, welche vorzugsweise eine Klemmschraube aufweist.

## Patentansprüche

1. Tiefbaumaschine (10) mit
- einem mobilen Trägergerät (15),
- einem Mast (18) oder Auslegerarm, welcher an dem Trägergerät (15) angeordnet ist,
- einem Tiefbauwerkzeug (34), welches zum Ausführen einer Tiefbaumaßnahme an dem Mast (18) oder Auslegerarm verstellbar ist,
- einer Maschinensteuereinheit,
- einem Bedienstand (17) für mindestens eine Bedienperson mit mindestens einem Monitor (52),
- wobei die Maschinensteuereinheit mit dem mindestens einen Anzeigegerät (52) in Verbindung steht und ausgebildet ist, Betriebsdaten in einer Anordnung von Anzeigefeldern auf dem mindestens einen Anzeigegerät (52) anzuzeigen,
**dadurch gekennzeichnet,**
- **dass** das mindestens eine Anzeigegerät (52) schwenkbar zwischen einer quergestellten Position und einer hochgestellten Position gelagert ist, welche, insbesondere um 90° zur quergestellten Position verschwenkt ist, und
- **dass** die Maschinensteuereinheit ausgebildet ist, bei einem Verschwenken des Anzeigegeräts (52) die Anordnung der Anzeigefelder auf dem Anzeigegerät (52) zu verändern und anzupassen, so dass diese für die Bedienperson weiter lesbar sind.

2. Tiefbaumaschine (10) nach Anspruch 1,
**dadurch gekennzeichnet,**
**dass** das mindestens eine Anzeigegerät (52) entlang einer Linearführung (62) verschiebbar gelagert ist.

3. Tiefbaumaschine nach Anspruch 2,
**dadurch gekennzeichnet,**
**dass** die Linearführung (62) eine Führungsstange mit mindestens einem geraden Abschnitt und/oder mindestens einem gebogenen Abschnitt aufweist.

4. Tiefbaumaschine nach Anspruch 2 oder 3,
**dadurch gekennzeichnet ,**
**dass** mehrere Anzeigegeräte (52) entlang einer oder mehrerer Linearführungen (62) verschiebbar und um eine jeweilige Schwenkachse (54) verschwenkbar sind.

5. Tiefbaumaschine nach einem der Ansprüche 1 bis 4,
**dadurch gekennzeichnet,**
**dass** das mindestens eine Anzeigegerät (52) schwenkbar an einem Verschiebeschlitten gelagert ist, welcher verschiebbar entlang der Linearführung (62) gelagert ist.

6. Tiefbaumaschine nach einem der Ansprüche 1 bis 5,
**dadurch gekennzeichnet,**
**dass** das mindestens eine Anzeigegerät (52) leicht abnehmbar gehaltert ist.

7. Tiefbaumaschine nach einem der Ansprüche 2 bis 6,
**dadurch gekennzeichnet,**
**dass** über die Linearführung (62) und/oder den Verschiebeschlitten mindestens eine Daten- und/oder Energiezuführung zu dem mindestens einen Anzeigegerät (52) gegeben ist.

8. Tiefbaumaschine nach einem der Ansprüche 1 bis 7,
**dadurch gekennzeichnet,**
**dass** die Maschinensteuereinheit einen Anzeige-Konfigurationsmodus umfasst, wobei bei der Aktivierung des Anzeige-Konfigurationsmodus die Anzeige auf dem mindestens einen Anzeigegerät (52) veränderbar und speicherbar ist.

9. Tiefbaumaschine nach einem der Ansprüche 1 bis 8,
**dadurch gekennzeichnet,**
**dass** mindestens ein Anzeigegerät als ein Monitor (52), insbesondere als ein Touchscreen, ausgebildet ist.

10. Tiefbaumaschine nach einem der Ansprüche 1 bis 9,
**dadurch gekennzeichnet,**
**dass** die Maschinensteuereinheit ausgebildet ist, die Anzeigefelder auf dem Anzeigegerät (52) unabhängig von der Schwenkposition stets in einer horizontalen Ausrichtung anzuzeigen, wobei Zahlen und Buchstaben im Wesentlichen horizontal ausgerichtet sind.

11. Tiefbaumaschine nach einem der Ansprüche 1 bis 10,
**dadurch gekennzeichnet,**
**dass** die Tiefbaumaschine (10) als ein Bohrgerät, eine Schlitzwandfräsvorrichtung, eine Greifervorrichtung, ein Seilbagger, eine Ramme oder ein Rüttler ausgebildet ist.

12. Verfahren zum Betreiben einer Tiefbaumaschine (10) nach einem der Ansprüche 1 bis 12,
**dadurch gekennzeichnet,**
**dass** das mindestens eine Anzeigegerät (52) zwischen einer quergestellten Position und einer hochgestellten Position verschwenkt wird.

13. Verfahren nach Anspruch 12,
**dadurch gekennzeichnet,**
**dass** das mindestens eine Anzeigegerät (52) entlang mindestens einer Linearführung (62) verschoben wird.

14. Verfahren nach Anspruch 12 oder 13,
**dadurch gekennzeichnet,**
**dass** ein Verschwenken und/oder Verschieben manuell durch einen Maschinenbediener oder automatisch durch eine Verstelleinrichtung, insbesondere abhängig von einem Betriebszustand der Tiefbaumaschine (10) durch die Maschinensteuereinheit, ausgeführt wird.

15. Verfahren nach einem der Ansprüche 12 bis 14,
**dadurch gekennzeichnet,**
**dass** das Anzeigegerät (52) bei Bedarf abgebaut und anschließend an die gleiche Stelle oder an einer versetzten Position wieder angebaut wird.

16. Verfahren nach einem der Ansprüche 12 bis 15,
**dadurch gekennzeichnet,**
**dass** neben einem ersten Anzeigegerät (52) mindestens ein weiteres Anzeigegerät (52) und/oder eine sonstige Anzeigeeinrichtung (50) innerhalb oder außerhalb der Tiefbaumaschine (10) angeordnet werden und
**dass** an dem weiteren Anzeigegerät (52) und/oder der sonstigen Anzeigeeinrichtung (50) das gleiche wie auf dem ersten Anzeigegerät (52) oder etwas anderes durch die Maschinensteuereinheit angezeigt wird.

17. Verfahren nach einem der Ansprüche 12 bis 16,
**dadurch gekennzeichnet,**
**dass** das mindestens eine Anzeigegerät (52) und/oder die mindestens eine Anzeigeeinrichtung (50) drahtlos mit der Maschinensteuereinheit zur Datenübertragung verbunden werden.

## Geänderte Patentansprüche

### Geänderte Patentansprüche gemäss Regel 137(2) EPÜ.

1. Tiefbaumaschine (10) mit
- einem mobilen Trägergerät (15),
- einem Mast (18) oder Auslegerarm, welcher an dem Trägergerät (15) angeordnet ist,
- einem Tiefbauwerkzeug (34), welches zum Ausführen einer Tiefbaumaßnahme an dem Mast (18) oder Auslegerarm verstellbar ist,
- einer Maschinensteuereinheit,
- einem Bedienstand (17) für mindestens eine Bedienperson mit mindestens einem Anzeigegerät (52),
- wobei die Maschinensteuereinheit mit dem mindestens einen Anzeigegerät (52) in Verbindung steht und ausgebildet ist, Betriebsdaten in einer Anordnung von Anzeigefeldern auf dem mindestens einen Anzeigegerät (52) anzuzeigen,
**dadurch gekennzeichnet,**
- **dass** das mindestens eine Anzeigegerät (52) schwenkbar zwischen einer quergestellten Position und einer hochgestellten Position gelagert ist, welche, insbesondere um 90° zur quergestellten Position verschwenkt ist, und
- **dass** die Maschinensteuereinheit ausgebildet ist, bei einem Verschwenken des Anzeigegeräts (52) die Anordnung der Anzeigefelder auf dem Anzeigegerät (52) zu verändern und anzupassen, so dass diese für die Bedienperson weiter lesbar sind.

2. Tiefbaumaschine (10) nach Anspruch 1,
**dadurch gekennzeichnet,**
**dass** das mindestens eine Anzeigegerät (52) entlang einer Linearführung (62) verschiebbar gelagert ist.

3. Tiefbaumaschine nach Anspruch 2,
**dadurch gekennzeichnet,**
**dass** die Linearführung (62) eine Führungsstange mit mindestens einem geraden Abschnitt und/oder mindestens einem gebogenen Abschnitt aufweist.

4. Tiefbaumaschine nach Anspruch 2 oder 3,
**dadurch gekennzeichnet ,**
**dass** mehrere Anzeigegeräte (52) entlang einer oder mehrerer Linearführungen (62) verschiebbar und um eine jeweilige Schwenkachse (54) verschwenkbar sind.

5. Tiefbaumaschine nach einem der Ansprüche 1 bis 4,
**dadurch gekennzeichnet,**
**dass** das mindestens eine Anzeigegerät (52) schwenkbar an einem Verschiebeschlitten gelagert ist, welcher verschiebbar entlang der Linearführung (62) gelagert ist.

6. Tiefbaumaschine nach einem der Ansprüche 1 bis 5,
**dadurch gekennzeichnet,**
**dass** das mindestens eine Anzeigegerät (52) leicht abnehmbar gehaltert ist.

7. Tiefbaumaschine nach einem der Ansprüche 2 bis 6,
**dadurch gekennzeichnet,**
**dass** über die Linearführung (62) und/oder den Verschiebeschlitten mindestens eine Daten- und/oder Energiezuführung zu dem mindestens einen Anzeigegerät (52) gegeben ist.

8. Tiefbaumaschine nach einem der Ansprüche 1 bis 7,
**dadurch gekennzeichnet,**
**dass** die Maschinensteuereinheit einen Anzeige-Konfigurationsmodus umfasst, wobei bei der Aktivierung des Anzeige-Konfigurationsmodus die Anzeige auf dem mindestens einen Anzeigegerät (52) veränderbar und speicherbar ist.

9. Tiefbaumaschine nach einem der Ansprüche 1 bis 8,
**dadurch gekennzeichnet,**
**dass** mindestens ein Anzeigegerät als ein Monitor (52), insbesondere als ein Touchscreen, ausgebildet ist.

10. Tiefbaumaschine nach einem der Ansprüche 1 bis 9,
**dadurch gekennzeichnet,**
**dass** die Maschinensteuereinheit ausgebildet ist, die Anzeigefelder auf dem Anzeigegerät (52) unabhängig von der Schwenkposition stets in einer horizontalen Ausrichtung anzuzeigen, wobei Zahlen und Buchstaben im Wesentlichen horizontal ausgerichtet sind.

11. Tiefbaumaschine nach einem der Ansprüche 1 bis 10,
**dadurch gekennzeichnet,**
**dass** die Tiefbaumaschine (10) als ein Bohrgerät, eine Schlitzwandfräsvorrichtung, eine Greifervorrichtung, ein Seilbagger, eine Ramme oder ein Rüttler ausgebildet ist.

12. Verfahren zum Betreiben einer Tiefbaumaschine (10) nach einem der Ansprüche 1 bis 11,
**dadurch gekennzeichnet,**
**dass** das mindestens eine Anzeigegerät (52) zwischen einer quergestellten Position und einer hochgestellten Position verschwenkt wird.

13. Verfahren nach Anspruch 12,
**dadurch gekennzeichnet,**
**dass** das mindestens eine Anzeigegerät (52) entlang mindestens einer Linearführung (62) verschoben wird.

14. Verfahren nach Anspruch 12 oder 13,
**dadurch gekennzeichnet,**
**dass** ein Verschwenken und/oder Verschieben manuell durch einen Maschinenbediener oder automatisch durch eine Verstelleinrichtung, insbesondere abhängig von einem Betriebszustand der Tiefbaumaschine (10) durch die Maschinensteuereinheit, ausgeführt wird.

15. Verfahren nach einem der Ansprüche 12 bis 14,
**dadurch gekennzeichnet,**
**dass** das Anzeigegerät (52) bei Bedarf abgebaut und anschließend an die gleiche Stelle oder an einer versetzten Position wieder angebaut wird.

16. Verfahren nach einem der Ansprüche 12 bis 15,
**dadurch gekennzeichnet,**
**dass** neben einem ersten Anzeigegerät (52) mindestens ein weiteres Anzeigegerät (52) und/oder eine sonstige Anzeigeeinrichtung (50) innerhalb oder außerhalb der Tiefbaumaschine (10) angeordnet werden und
**dass** an dem weiteren Anzeigegerät (52) und/oder der sonstigen Anzeigeeinrichtung (50) das gleiche wie auf dem ersten Anzeigegerät (52) oder etwas anderes durch die Maschinensteuereinheit angezeigt wird.

17. Verfahren nach einem der Ansprüche 12 bis 16,
**dadurch gekennzeichnet,**
**dass** das mindestens eine Anzeigegerät (52) und/oder die mindestens eine Anzeigeeinrichtung (50) drahtlos mit der Maschinensteuereinheit zur Datenübertragung verbunden werden.
